# EUROPEAN PATENT APPLICATION

(11) **EP 4 123 487 A1**
(43) Date of publication of application: **25.01.2023**
(21) Application number: 22179977.8
(22) Date of filing: 20.09.2007
(51) Int. Cl.: G06F 21/55, G06F 21/57

(54) **PROTECTING INTERFACES ON PROCESSOR ARCHITECTURES**

(30) Priority: 25.09.2006 US 527747
(62) Divisional of application: 07826469.4
(71) Applicant: Nokia Technologies Oy, 02610 Espoo (FI)
(72) Inventor: EKBERG, Jan-Erik, 01740 Vantaa (FI)
(74) Representative: Swindell & Pearson Limited

(57) **Abstract**

A method, an apparatus and a computer program product are disclosed for verifying the trustworthiness of a software in an apparatus, and switching a hardware signal in the apparatus into a first state when the software is not trustworthy.

## Description

### FIELD OF THE INVENTION

This invention relates to a method, an apparatus and a computer program product for verifying the trustworthiness of a software in an apparatus.

### BACKGROUND OF THE INVENTION

Common mobile phones are designed around a single processing core that contains both a general-purpose processing component and a component that contains large parts of the GSM/3G stacks.

Other legacy interfaces presumably connect to energy management, the SIM interface, the radio module etc. These additional cores are mapped into the execution environment by I/O addresses, shared memory etc. for interfacing with the phone software (SW) like for originating/terminating calls, receiving SMS etc.

The open source (licensing) model is a term used in software, most notably in some Unix variants like Linux or BSD, but also in many commonly used application libraries and SW stacks. For instance, the open source SW may be used for the phone SW.

Many of the open source licenses require that the source code of any device constructed on this platform should be available on demand.

Thus, if applying an open-source operating system (OS) on a single processing core as described above, by license, it is possible that the OS source code, possibly including drivers, must be made public. In addition, it may be possible, that the community will modify and improve the SW platform, and replace the OS on the device. Also, because of the commonality of these architectures, a vast range of debugging and inspection tools are available, by which skilled users can monitor how the OS controls/communicates with devices, often even "reverse engineering" closed binary stacks in the process.

These debugging and inspections tools are suited to expose the legacy interfaces of the processor core. Most interfaces have no security, and may expose quite critical and low-level application programming interfaces.

This introduces the risk that misuse of those interfaces may not only cause harm for the telephone itself, but also for the network and for the user, e.g. by increased radiation.

Furthermore, the use of the interfaces is also a licensing issue with the authorities, in order to operate on a licensed band both the HW and the SW are included in the licensing process.

Thus, the interfaces need to be protected against harmful use by hackers, but it must also be ascertained that only the right (licensed) SW stack can be used to operate the interfaces.

### SUMMARY OF THE INVENTION

In view of the above-mentioned problem, it is, inter alia, an object of the present invention to provide a method, a computer program, a computer program product, devices, a system and a protocol for protecting interfaces of an apparatus against harmful use by hackers.

A method is disclosed which comprises verifying the trustworthiness of a software in an apparatus, and switching a hardware signal in the apparatus into a first state when said software is not trustworthy.

According to the present invention, the trustworthiness of a software in the apparatus, which for example may be loaded into the apparatus by a user by means of a user interface, is verified. Trustworthiness of a software may for example mean that the software in the apparatus corresponds a software certified by the manufacturer of the apparatus, so that trustworthiness may not be given when the apparatus comprises software being different from the certified software, for example uploaded by a hacker in said apparatus.

This verification may be performed by measuring at least one fingerprint of said software, and comparing said at least one measured fingerprint to at least one reference integrity fingerprint, wherein said at least one reference integrity fingerprint may correspond to a certified software, and wherein said at least one reference integrity fingerprint may be stored in a non-volatile memory in said apparatus. For instance, said verification may use algorithms and/or techniques conforming to or based on the Trusted Computing (TCG) standard, but also other verification algorithms may be used.

For instance, the apparatus may comprise a processing component for performing the trustworthiness verification, which may be called trusted computing component. For instance, said processing component may use techniques conforming to or based on the Trusted Computing Group (TCG) standards, but it also may use other verification techniques. Said processing component may be a hardware processing unit, and said hardware processing component or at least parts of said hardware processing component may be protected.

Said software may be any software used in said apparatus, like software for an operating system, BIOS software, firmware software, any kind of driver software and other kinds of software. Thus, said verification of the apparatus software may allow verifying the trustworthiness of a system of said apparatus.

When said software is verified and determined to be not trustworthy, the hardware signal is switched into the first state. Furthermore, if said software is determined to be trustworthy, the hardware signal may be switched into a second state, or the hardware signal may not change and keeps its state. Further, for instance, if it is determined that trustworthiness of software is not given, then the hardware signal may be switched into the first state until the apparatus is reset.

The hardware signal may be a signal on at least one hardware signal line in the apparatus, wherein said at least one hardware signal line may be connected to the processing component for performing the trustworthiness verification. Said at least one hardware signal line may be wired in the apparatus, and no other component of the apparatus except for the processing component for performing the trustworthiness may change said hardware signal on said at least one hardware signal line. Since the determined trustworthiness information is provided to the hardware signal, the determined trustworthiness information can be decoupled from an operating system of the apparatus so that a hacker may not corrupt this hardware signal by using software. Thus, this hardware signal represents reliable information over the trustworthiness of the software on said apparatus, since the determined trustworthiness information can be transmitted decoupled from an operating system of the apparatus. This solution using the hardware signal according to the present invention avoids that the determined trustworthiness information may be corrupted via software, which for instance could be used to corrupt the determined trustworthiness information if it would be transmitted via an internal bus of the apparatus by using a protocol. Thus, said hardware signal may represent a signal which can not be influenced by software of the operating system of said apparatus. Hence, said hardware signal is highly efficient in protecting against software attacks. After verification of the trustworthiness, the determined trustworthiness information, like the first state of said hardware signal, may only be tampered with by a hardware attack, but not by means of software.

Said apparatus may represent a processor core that may comprise a general-purpose processing component, e.g. a digital signal processor, and which may be operated by an operating system, and wherein said apparatus may be capable of loading software, e.g. by use of an user-interface, wherein said software may be loaded into the general-purpose processing component or a memory component, and wherein said software may be used for replacing the operating system of the apparatus. The apparatus may comprise at least one interface for connecting the processor core to external electronic modules, for example an interface for connecting the apparatus to a network. Thus, said hardware signal may be used to disable at least one of said at least one interface when the hardware signal is in the first state, so that the processor core may be disconnected from at least one of said at least one external electronic module when trustworthiness of the software is not given. Furthermore, one or more processing components of the processor core may be disabled by means of the hardware signal when it is in the first state.

Said verification of the software's trustworthiness may be applied to verify the trustworthiness of the software of an operating system of the processor core, and thus the trustworthiness of the operating system can be verified.

For instance, said processor core may be a single-chip processor core, and said hardware signal may be transmitted via at least one hardware signal line inside the single-chip to at least one processing component and/or to at least one interface. For example, said at least one hardware signal line may be wired in the processor silicon, and thus the risk of tampering said hardware signal is minimized.

For instance, the processor core may represent a processor core for a wireless device, like a mobile phone, or a WLAN or Bluetooth^{®} device or any other wireless device, wherein said processor core may comprise a general-purpose processing component and a processing component for special operations of the wireless system, e.g. a processing component for GSM and/or 3G functions/processing like a GSM/3G core. Said hardware signal may be used to disable said processing component for special operations of the wireless system when the hardware signal is in the first state, thus the wireless function of the processor core can be disabled in case that trustworthiness of said software is not given which also leads to decreased power consumption of the processor core.

Furthermore, at least one of the processor core's interfaces may be disabled when the hardware signal is in the first state, like a radio interface for connecting the processor core to a high frequency radio module. Thus, in case that software in the processor core is determined to be not trustworthy, misuse of the radio interface is prevented, and harm of the wireless device itself, for the network and for the user, e.g. by increased radiation, is prevented.

According to the present invention, it can be ascertained that only the right (licensed) software can be used to operate the apparatus.

According to an embodiment of the present invention, said apparatus comprises at least one processing component, wherein said method comprises disabling at least one of said at least one processing component when said hardware signal is in the first state.

For instance, said at least one of said at least one processing component may be a processing component used for calculating signals for interconnecting said apparatus to a network, wherein said processing component may for example be a radio core in case that the apparatus represents a processor core for a wireless system. Thus, in case that software in the processor core is determined to be not trustworthy, misuse of the network may be prevented.

According to an embodiment of the present invention, said apparatus comprises at least one interface, wherein said method comprises disabling at least one of said at least one interface when said hardware signal is in the first state.

Thus, in case that trustworthiness of the software is not given said at least one interface is disabled. At least one of said at least one interface may be an interface for connecting the apparatus to a network, e.g. a radio network like a GSM or UMTS network. Hence, in case of corrupted software, which may be a software component of an operating system of the apparatus which is corrupted by a hacker, the hardware signal disables said at least one interface so that the apparatus is disconnected from said network and corruption of the network can be avoided. For example, in case that the apparatus is a processor core for a wireless system, at least one of said at least one interface may be a radio interface for connecting the processor core to a highfrequency radio module. Furthermore, harm for the user itself, e.g. by increased radiation, may be prevented.

According to an embodiment of the present invention, said method comprises extracting at least one digital fingerprint of said software and comparing at least one of said at least one digital fingerprint to at least one reference integrity fingerprint for verifying trustworthiness of said software.

Said at least one reference integrity fingerprint may represent at least one fingerprint of a certified software and/or components of a certified software. Thus, if said at least one of said at least one extracted digital fingerprint corresponds to a reference integrity fingerprint then it can be assumed that the software/software component corresponding to said at least one of said at least one extracted digital fingerprint is not corrupted anyway since it can be assumed to be identical to the certified software/software component.

Said at least one reference integrity fingerprint may be stored in a memory component of said apparatus, wherein said memory component may be protected, e.g. against hackers, and wherein said memory component may represent a non-volatile memory.

Said at least one digital fingerprint may be generated by a cryptographic hash function, wherein said hash function calculates a hash value of the software or a component of the software. For instance, said cryptographic hash function may represent a hash function with certain additional security properties to make it suitable for use as a primitive in various information security applications, such as authentication and message integrity. A hash function may take a long string (or message) of any length as input and produces a fixed length string as output which may correspond to a digital fingerprint. Said cryptographic hash function should enable good collision resistance, so that it should be hard to find two different messages m1 and m2 such that the hashed values hash(m1) and hash(m2) are equal.

Thus, an extracted digital fingerprint may represent an extracted hash value, and a reference integrity fingerprint may represent a hash value which has been calculated with the same hash function of a certified software/software component. A fundamental property of hash functions is that if two hash values (according to the same function) are different, then the two inputs are different in some way.

According to an embodiment of the present invention, said apparatus comprises a trusted platform module including a set of registers and a hashing function, and said method comprises hashing at least one reference metric of said software, extending said at least one metric into at least one register of said set of registers, and comparing the content of at least one of said at least one register to at least one reference integrity metric certificate for verifying trustworthiness of said software.

Said at least one reference integrity metric certificate may represent at least one reference integrity metric hashed from a certified software and/or components of a certified software, wherein the hash function corresponds to the hash function used by the trusted platform module to hash said at least one reference metric. For instance, said reference integrity metrics certificates may be signed by a manufacturer and they may be possible bound to a counter for freshness.

For instance, said trusted platform module (TPM) may comply with the Trusted Computing Group's Mobile TPM specification, and said trusted platform module may represent a TPM core, wherein said TPM core may be a protected core.

Said set of registers may be represented by at least one Platform Configuration Register (PCR), wherein said at least one PCR may be configured to hold information about platform characteristics, i.e. characteristics of the apparatus, wherein said platform characteristics may be hashes of software of different components of the apparatus, like the BIOS, the firmware, the operating system, drivers etc.

Said hashed at least one reference metric may correspond to said at least one digital fingerprint mentioned in the preceding embodiment. For example, when a new software component is loaded into the apparatus, a reference metric of said software component is hashed and said reference metric is extended into a first PCR of said set of PCRs. This extending may include concatenating the reference metric with the content of a PCR of said set of PCRs, and calculating a hash value of said concatenated reference metric and PCR content and storing this hashed concatenated value into the first PCR of said set of PCRs. Then, the content of said first PCR may be compared to at least one reference integrity metric certificate in order to verify the trustworthiness of said software component. I.e. the extended reference metric, which is stored in the first PCR, is compared to at least one reference integrity certificate. For example, this verification is performed before the loaded software component is executed, so that a loaded software component will only be executed when trustworthiness of said software component is determined.

The trusted platform module may comprise a microcontroller to perform the hash, extend and verify operations. Furthermore, said microcontroller may be connected to at least one hardware signal line, wherein the microcontroller generates the hardware signal and applies it to said at least one hardware signal line. Alternatively, said at least one hardware signal line associated with the hardware signal may be connected to a PCR of said set of PCRs, wherein the content of said PCR may correspond a state of the of hardware signal on said at least one hardware signal line, so that when trustworthiness is not given, said PCR is set to the first state, for example indicated by the lowest significant bit, or said PCR may be set to another state like a second state when trustworthiness is given.

A Core Root of Trust for Measurement (CRTM) may be established according to the TPM specification in order to provide a secure measurement function. This CRTM may tie the trust root in a TPM core to the manufacturer, and it may be seen as the ultimate root of trust. For instance, when the apparatus is reset, the CRTM may measure all executable firmware in said apparatus by measuring a hash value, i.e. a first reference metric, of the software of said executable firmware and storing this reference metric in a first PCR of said set of PCRs. Then this reference metric may be compared with a reference integrity metric certificate in order to verify the trustworthiness of said software of said executable firmware, and only if trustworthiness is determined, then said executable firmware is executed in order to initiate a boot process. The content of said first PCR may be extended by concatenation with further measured reference metrics of further software components to further PCRs of said set of PCRs in order to verify trustworthiness of said further software components. If trustworthiness is not determined, then said hardware signal is switched into the first state.

According to an embodiment of the present invention, a further register of said set of registers can only be updated by a reference integrity metric certificate, wherein at least one bit of said further register is wired to at least one hardware signal line, wherein said at least one hardware signal line transmits said hardware signal, and wherein said method further comprises setting said further register to a first value which switches the hardware signal on said at least one hardware signal line in the first state prior to verify trustworthiness of said software; and updating said further register to a second value by said reference integrity metric certificate in case that the result of said comparing the content of said at least one of said at least one of said at least one register to at least one reference integrity metric certificate for verifying trustworthiness is a success, wherein said second value switches the hardware signal on said at least one hardware signal in a second state indicating trustworthiness of said software.

Said further register is different from said at least one register containing said at least one extended reference metric. Furthermore, said further register is suited to be locked, so that it only can be updated by said reference integrity metric certificate. For instance, said further register is a PCR register, and said locking function may be provided by a TPM feature.

Said reference integrity metric may not only contain a reference value for checking the validity of at least one of said at least one extended reference metric in at least one of said at least one register, it may also contain a place for a value that can be set into a given register, e.g. said further register. Said value in said reference integrity metric is only set into said given register when integrity verification of said reference integrity metric compared to measured reference metrics is a success, e.g. by comparing said reference integrity metric to at least one of said at least one extended reference metric in said at least one register.

Thus, said reference integrity metric may contain said second value in said place, so that when trustworthiness is detected by checking said at least one extended reference metric in said at least register by said reference integrity metric, then said second value is updated into said further register, so that said further register switches the hardware signal into said second state. Otherwise, i.e. when trustworthiness is not given, then said further register keeps the first value which keeps switching the hardware signal in the first state.

For instance, during a boot sequence the measured reference metrics are extended into said at least one register, and afterwards, it is verified by said reference integrity metric whether said extended reference metrics indicate trustworthiness, and in case that trustworthiness is given, then said reference integrity metric updates said second value into said further register in order to switch the hardware signal into the second state.

For instance, said at least one hardware signal line is wired to the lowest bit of said further register, wherein said first value is an even value and said second value is an odd value.

Thus, if trustworthiness is detected by said reference integrity metric containing the second value in said place, i.e. an odd value, then said further register is set to 1 at the lowest bit and the hardware signal on said at least one hardware signal line is set to value 1 correspondingly, wherein said value 1 on said at least one hardware signal line corresponds to said second state of said hardware signal. Since said first value is even, the lowest bit of said further register is set to value 0 before verifying trustworthiness corresponding to the first state of said hardware signal, so that said further register and said hardware signal keep value 0 when trustworthiness is not given.

According to an embodiment of the present invention, said trustworthiness is verified during a boot sequence of the apparatus.

For example, said boot sequence of said apparatus may comprise loading and executing several software components successively, like firmware, BIOS, an operating system loader and the operating system and other components.

Thus, when the boot sequence is started, the trustworthiness of a first software component of said several software components, e.g. the firmware, is verified, and only when trustworthiness of said first software component is determined, then the first software component is executed, otherwise said hardware signal is switched into the first state in order to indicate that trustworthiness of software is not given. If trustworthiness of said first software component is determined, then after execution of said first software component the trustworthiness of the next software component of said boot sequence is verified, so that each software component is verified before being executed.

Any of the above-mentioned verification methods may be applied to perform this trustworthiness verification during the boot sequence.

For example, said Trusted Platform Module comprising the set of Platform Configuration Registers (PCRs) may be applied to perform the verification as explained above by hashing a reference integrity metric of a software component of said several software components of the boot sequence, extending it to a PCR of said set of PCRs and verifying the trustworthiness by comparing the content of said PCR to at least one reference integrity metric certificate.

For example, before starting the verification of the boot software, any PCR of the set of PCRs is initialized, and the hardware signal is switched to the first state.

For instance, as described above, the CRTM may measure the first software component of said several software components of the boot sequence, wherein said first software component may correspond to the firmware in said apparatus, by measuring a hash value, i.e. a first reference metric, of the software of said first software component and storing this reference metric in a first PCR of said set of PCRs. Then this reference metric in the first PCR is compared to at least one reference integrity metric certificate in order to verify the trustworthiness of the first software component, and only if the first component is determined to be trustworthy, then said first software component is executed in order to initiate the boot sequence, otherwise the hardware signal is switched in the first state and the boot process may be stopped. Then, if trustworthiness of the first software component is given, a second reference metric is hashed from the successive software component of the boot sequence, and the second reference metric is concatenated with the content of the first PCR and the hashed value of this concatenation is extended in a second PCR of said set of PCRs in order to verify the trustworthiness of the second software component. In this iterative way, the trustworthiness of the boot sequence's software components can be verified, wherein a reference metric is hashed from a next software component of the boot sequence, this reference metric is concatenated with the content of the PCR which corresponds to the preceding software component and is extended in the next PCR of said set of PCR in order to verify the trustworthiness. If the boot sequence is correct, i.e. if the extended reference metric of the last software component of the boot sequence which depends on the content of all preceding PCRs is verified to be correct, then the hardware signal may be switched in a second state to indicate trustworthiness of the software of the boot sequence.

For instance, at least one hardware signal line may be wired to a PCR of said set of PCRs, and said PCR is set to a preset value when the boot sequence is verified to be trustworthy, e.g. to value 1, so that the signal with value 1 on said at least one hardware signal line corresponds to the hardware signal in the second state and indicates trustworthy of the boot software, for example by using a reference integrity metric certificate containing a place for a value that can be set into said PCR as explained above. If trustworthiness is not given, then said PCR's content is 0 and corresponds to the first state of the hardware signal.

Alternatively, a microcomputer of the trusted platform module may be connected to said at least one hardware signal line and may switch the signal on said at least one hardware signal line to said preset value corresponding to the second state indicating the boot software is trustworthy when trustworthiness of the software of the boot sequence is given, otherwise the microcomputer may switch the signal on said at least one hardware signal line to another preset value corresponding to first state of said hardware signal.

For instance, said at least one hardware signal line is connected to at least one interface of said apparatus and/or is connected to at least one processing unit of said apparatus. Then, as mentioned above, the hardware signal on said at least one hardware signal line may be used to control at least one interface and/or to control at least one of said processing unit, so that at beginning of the boot said at least one interface and/or said at least one processing unit may be disabled according to the first state of the hardware signal on said at least one hardware signal line, and when the hardware signal switches to the second state, said at least one interface and/or said at least one processing unit may be enabled.

According to an embodiment of the present invention, said trustworthiness is verified during runtime operation of the apparatus.

Any of the above-mentioned verification methods may be applied to perform this trustworthiness verification during runtime operation of the apparatus.

For example, said hardware signal is switched into the first state prior to let a user load software into the apparatus, so that for instance at least one interface of said apparatus and/or at least one processing component of said apparatus is disabled, and then said software is loaded and the trustworthiness of the software verified. If said software is trustworthy, then said hardware signal is switched into the second state to indicate trustworthiness of said software, so that for instance said at least one interface of said apparatus and/or said at least one processing component of said apparatus is enabled.

For instance, if it is determined that trustworthiness of software is not given, then the hardware signal may be switched into the first state until the apparatus is reset.

Furthermore, said trustworthiness verification may be performed repeatedly during runtime operation.

According to an embodiment of the present invention, said hardware signal is switched into a second state prior to verifying trustworthiness of said software, wherein said hardware signal cannot be switched from said first state into a different state without restarting the apparatus.

Said second state may indicate that trustworthiness of software is given.

Thus, in case that software is determined to be not trustworthy and said hardware signal is switched from said second state into said first state, then it is impossible to switch the hardware signal back into the second state for indicating that the software is trustworthy. If software is determined to be not trustworthy, then said hardware signal will keep said first state until the apparatus is switched off. This allows tampering with the hardware signal after software has been determined to be not trustworthy.

According to an embodiment of the present invention said hardware signal is transmitted via at least one hardware signal line, and wherein said hardware signal is switched by a one-directional switch, wherein said one-directional switch cannot switch the hardware signal from said first state into a different state without restarting the apparatus.

Said one-directional switch may be connected to said processing component for performing the trustworthiness verification, wherein said processing component may be represented by said TPM module. For instance, when the apparatus is turned on, the one-directional switch switches the hardware signal on said at least one hardware signal line into said second state. Then, if software is determined to be not trustworthy, the one-directional switch switches the hardware signal into the first state. Since said one-directional switch can not switch the hardware signal back into the second state, said hardware signal will permanently indicate that trustworthiness is not given and cannot be tampered with.

This allows, when having a secure boot sequence as described above, keeping all interfaces of the processing component for performing the trustworthiness verification public and open, since the hardware signal can not be switched from said first state into the second state.

According to an embodiment of the present invention, said apparatus is a single-chip processor core, and said hardware signal is transmitted via at least one hardware signal line wired inside the single-chip processor core.

Said at least one hardware signal line may be wired in the silicon of the chip which allows for prevention of tampering with said hardware signal line and the hardware signal very effectively.

According to an embodiment of the present invention, said single-chip processor core is a processor core for a mobile phone.

Said at least one hardware signal line may be wired in the silicon of the chip which allows for prevention of tampering with said hardware signal line and the hardware signal very effectively.

For instance, the said single-chip processor core may comprise a general-purpose processing component and a processing component for special operations of the wireless system, e.g. like a processing component for GSM and/or 3G functions/processing like a GSM/3G core. Furthermore, said single-chip processor core may comprise at least one memory to load software, wherein said software may also be loaded into the general-purpose processing component. Furthermore, said single-chip processor core may comprise a trusted platform module for verifying trustworthiness of software, as explained in the above-mentioned embodiments of the invention.

Said hardware signal may be used to disable said processing component for GSM and/or 3G functions when the hardware signal is in the first state.

Furthermore, said single-chip processor core may comprise a radio interface for connecting the processor core to a radio frequency module. For instance, said hardware signal may be fed to this radio interface for disabling said radio interface when the hardware signal is in the first state.

Thus, when a software in said single-chip processor is determined to be not trustworthy, then said hardware signal may disable the processing component for GSM and/or 3G functions and/or may disable said radio interface, so that it can be ascertained that only the right (licensed) software can be used to operate the radio interface and/or the processing component for GSM and/or 3G functions of the processor core. Thus, misuse of the radio interface is prevented, and harm of the telephone itself, for the network and for the user, e.g. by increased radiation, is prevented. Furthermore, said disabling may lead to decreased power consumption of the mobile phone.

Furthermore, an apparatus is disclosed, wherein said apparatus comprises a memory configured to store software; a first processing component configured to verify the trustworthiness of the software; at least one hardware signal line connected to said first processing component, and wherein said first processing component is capable of switching a signal on said at least one hardware signal line into a first state when said software is not trustworthy.

Said signal on said at least one hardware signal line corresponds to the hardware signal mentioned above. Furthermore, the explanations mentioned above with respect to the method and the embodiments thereof also hold for the disclosed apparatus and the following embodiments thereof.

According to an embodiment of the present invention, said apparatus comprises at least one further processing component, and at least one of said at least one hardware signal line is connected to at least one of said at least one further processing component, and in the first state said signal on said at least one hardware signal line disables said at least one of said at least one processing component.

According to an embodiment of the present invention, said apparatus comprises at least one interface, and at least one of said at least one hardware signal line is connected to at least one of said at least one interface, and in the first state said signal on said at least one hardware signal line disables said at least one of said the least one interface.

According to an embodiment of the present invention, said first processing component is configured to extract at least one digital fingerprint of said software and to compare at least one of said at least one digital fingerprint to at least one reference integrity fingerprint for verifying the trustworthiness of said software.

According to an embodiment of the present invention, said first processing component is a trusted platform module comprising a set of registers and a hashing function, wherein said trusted platform module is configured to hash at least one reference metric of said software, and to extend said at least one reference metric into at least one register of said set of registers, and to compare the content of at least one of said at least one register to at least one reference integrity metric certificate for verifying the trustworthiness of said software.

According to an embodiment of the present invention, said first processing component is configured to verify the trustworthiness during a boot sequence of the apparatus.

According to an embodiment of the present invention, said first processing component is configured to verify the trustworthiness during the run-time operation of the apparatus.

According to an embodiment of the present invention, said apparatus is a single-chip processor core, and said at least one hardware signal line is wired inside the processor.

According to an embodiment of the present invention, said apparatus is a single-chip processor core for a mobile device.

According to an embodiment of the present invention, said apparatus is a single-chip processor core for a mobile device.

Moreover, an electronic device is disclosed, which comprises the disclosed apparatus. For instance, said electronic device may be a mobile phone.

Finally, a computer program product is disclosed, in which a program code is stored in a computer readable medium. The program code realizes the disclosed method when executed by a processor.

The computer program product could be for example a separate memory device, which may for example be protected. Furthermore, said separate memory device may be integrated in the above-mentioned trusted platform component.

Other objects and features of the present invention will become apparent from the following detailed description in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

In the figures show:
- FIG. 1a:: a schematic block diagram of an exemplary apparatus according to the present invention;
- FIG. 1b:: a schematic block diagram of an electronic device comprising an apparatus according to the present invention;
- FIG. 2a:: a first exemplary device for a trusted computing component according to the present invention;
- FIG. 2b:: a second exemplary device for a trusted computing component according to the present invention;
- FIG. 2c:: a third exemplary device for a trusted computing component according to the present invention;
- FIG. 3:: a flow chart illustrating a first exemplary method according to the present invention;
- FIG. 4:: a flow chart illustrating a second exemplary method according to the present invention; and
- FIG. 5:: a flow chart illustrating a third exemplary method according to the present invention.

### DETAILED DESCRIPTION OF THE INVENTION

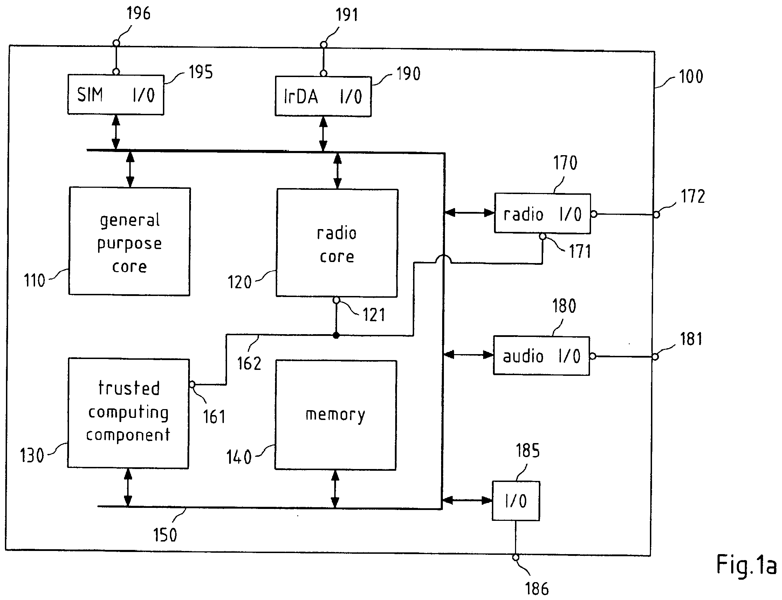

FIG. 1a depicts a schematic block diagram of an exemplary apparatus, wherein the apparatus represents a processor core 100 usable for a wireless device like a mobile phone. In the description that follows, it is assumed that this processor core is configured for a GSM and/or 3G mobile phone, but the processor core may be used for any other wireless system like Bluetooth^{®}, WLAN etc.

Said processor core 100 comprises a general purpose core 110, a radio core 120, a trusted computing component 130, at least one memory 140, at least one system bus 150, and a set of interfaces comprising a SIM interface 195, an infrared interface 190, a radio interface 170 for connecting the processor core to a radio frequency module, an audio interface 180, and at least one further interface 185. Said processor core 100 may comprise further components, like a RAM or a ROM, or other interfaces, or at least one quartz oscillator etc.

The processor core 100 is operated by software, wherein said operating software may be stored in memory 140 or in a memory in the general purpose core 110 or in any other memory in the processor core not shown in FIG. 1a. Furthermore, the components of the processor core 100 are connected together via said at least one system bus 150. Of course, the components may be connected by more than the one depicted system bus 150. Further, the general purpose core may control the system bus 150 and its traffic by use of a protocol.

Said radio core 120 may comprise special functions of the wireless system, like a GSM and/or 3G stack and/or digital signal processing for the GSM and/or 3G system.

Said at least one further interface 185 may be used to load software into the processor core 100, for example software for the operating system, or software to replace firmware software in the processor core, or driver software or any other software in the processor core. This loaded software may be loaded into memory 140 or into a memory in the general purpose core 110. Furthermore, said at least one further interface 185 may be used to connect the processor core 100 to a display, or a keypad, and other components of a mobile device.

The trusted computing component 130, which may correspond to an exemplary realization of the first processing component mentioned above in the summary of the invention, is configured to verify the trustworthiness of software stored in a memory of the processor core 100, wherein said memory may be memory 140, a memory in the general purpose core 110 or any other memory in the processor core not shown in FIG. 1a. For instance, any newly loaded software in the processor core may be verified by the trusted computing component 130 before being executed. Any of the method and the embodiments thereof explained in the summary of the invention may be performed by the trusted computing component 130 in order to verify the trustworthiness of said software. In the description below, several exemplary methods for verifying trustworthiness of software will be explained. At least one hardware signal line 162 is connected to the trusted computing component via connector 161. Said at least one hardware signal line 162 carries the hardware signal according the invention, and the trusted computing component 130 switches said hardware signal on said at least one hardware signal line 162 into a first state when the trusted computing component 130 determines that software is not trustworthy.

Said at least one hardware signal line 162 may be connected to the radio core 120 via connector 121, and it may be connected to the radio interface 170 via connector 171, so that the radio core 120 and/or the radio interface 170 are disabled when the hardware signal on said at least one hardware signal line 162 is switched into the first state. Thus, in case trustworthiness of software in the processor core is not given, which may for instance be caused by a hacker who loaded a hacked software for the operating system into the processor core, the radio interface 170 is disabled so that misuse of the radio interface is prevented, and harm of the telephone itself, for the network and for the user, e.g. by increased radiation, is prevented. This may also be achieved by disabling the radio core 120. Furthermore, disabling of the radio core 120 leads to decreased power consumption of the mobile phone.

Furthermore, not shown in FIG. 1a, said at least one hardware signal line 162 may be connected to other components/interfaces of the processor core 100 in order to disable these components/interfaces when the hardware signal on said at least one hardware signal line 162 is in the first state. E.g., said at least one hardware signal line 162 may be connected to the SIM interface 195 in order to disable the SIM interface 195 when the trusted computing component 130 determines software to be not trustworthy.

Said at least one hardware signal line 162 is wired in the processor core 100. Only the trusted computing component 130 is able to change the hardware signal on said at least one hardware signal line 162 via the connector 161. Since the trustworthiness information determined from the trusted computing component 130 is provided to the hardware signal carried on said at least one hardware signal line 162, the determined trustworthiness information can be decoupled from an operating system of the processor core so that a hacker may not corrupt this hardware signal by using software. Thus, this hardware signal on said at least one hardware signal line 162 represents a reliable information over the trustworthiness of software on said apparatus, since the determined trustworthiness information can be transmitted decoupled from an operating system of the apparatus. This solution using the hardware signal according to the present invention avoids that the determined trustworthiness information may be corrupted via software, which for instance could be used to corrupt the determined trustworthiness information when it would be transmitted via the system bus 150 by using a protocol.

For instance, the processor core 100 is a single-processor core. For this case, said at least one hardware signal line 162 may be wired in the single-processor core, i.e. in the silicon of the single-processor core, so that tampering of said at least one hardware signal line 162, and thus tampering of said hardware signal on said at least one hardware signal line 162 is prevented very efficiently.

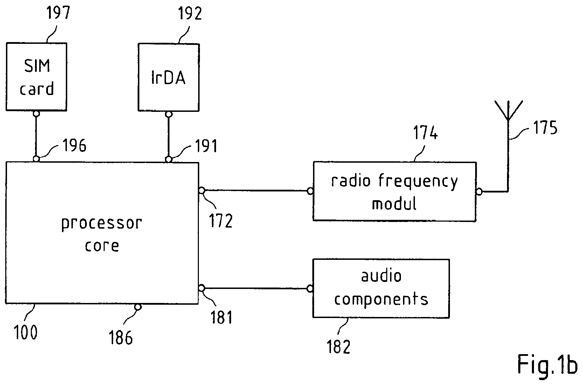

FIG. 1b depicts an exemplary embodiment of a device comprising the exemplary processor core 100 shown in FIG. 1a, wherein only selected components of the device are shown, like a radio frequency module 174 and an antenna 175 connected to the output/input 172 of the radio interface 170 of processor core 100, audio components 182 connected to the output/input 181 of the audio interface 180, an infrared component 192 connected to the output/input 191 of the infrared interface 190 and a SIM card 197 connected to the output/input 196 of the SIM card controller 195. For instance, said device may be a mobile phone, wherein other components may be connected to an input/output 181 of said at least one further interface 180 of the processor core 100. Further components of the device may be connected to said at least one interface 185 of the processor core 100 via connector 186, like a display, a keypad etc. For instance, said device may be mobile phone.

According to present invention, said hardware signal is switched into the first state when software in the processor core is determined not to be trustworthy, and then the radio interface 170 of the processor core may be disabled, so that the radio interface module 174 is not fed with a signal and the antenna 175 does not radiate. Thus, harm for the network and for the user, e.g. by increased radiation, may be prevented in case software that is not certified is loaded into the processor core.

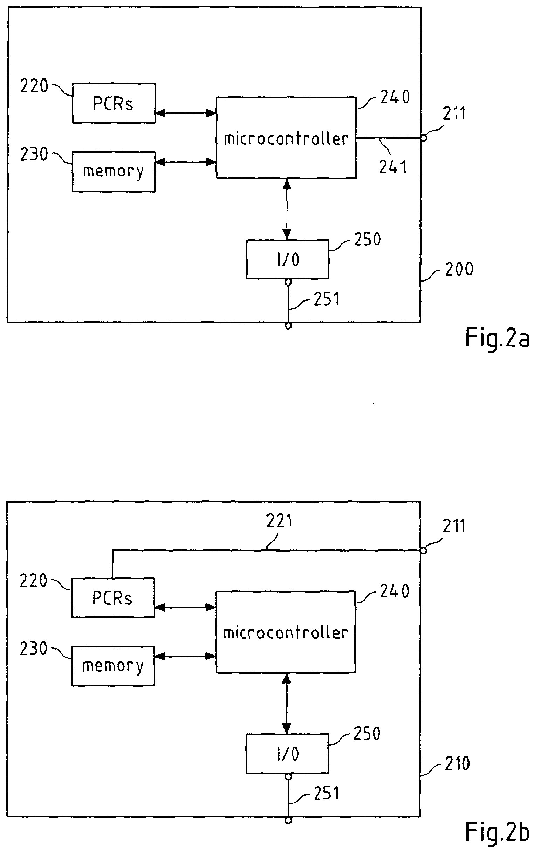

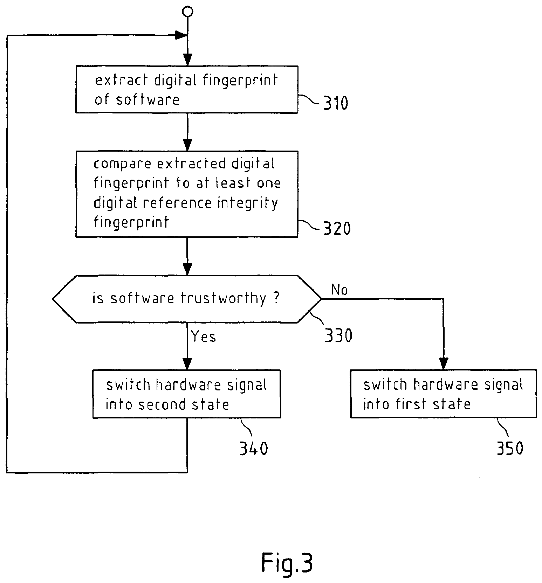

FIG. 3 depicts a first exemplary method for verifying trustworthiness of software according to the present invention. This method may be performed by the trusted computing component 130 depicted in FIG. 1a, wherein said trusted computing component 130 may be realized by the trusted platform modules 200, 210 depicted in Figs. 2a and 2b.

According to this first exemplary method, a digital fingerprint is extracted from said software in the processor core 100 at step 310, and said digital fingerprint is compared to at least one reference integrity fingerprint at step 320 for verifying trustworthiness of said software at step 330.

Said at least one reference integrity fingerprint may represent at least one fingerprint of certified software and/or components of certified software. Thus, if said at least one of said at least one extracted digital fingerprint corresponds to a reference integrity fingerprint then it can be assumed that the software/software component corresponding to said at least one of said at least one extracted digital fingerprint is not corrupted anyway since it can be assumed to be identical to the certified software/software component.

Said at least one reference integrity fingerprint may be stored in a memory component of the processor core 100, wherein said memory component may be protected, e.g. against hackers, and wherein said memory component may represent a non-volatile memory. For example, said memory component is in the trusted computing component 130.

Said at least one digital fingerprint may be generated by a hash function, wherein said hash function calculates a hash value of the software or a component of the software. Thus, an extracted digital fingerprint may represent an extracted hash value, and a reference integrity fingerprint may represent a hash value which has been calculated with the same hash function of a certified software/software component

If the extracted digital fingerprint corresponds to a digital reference integrity fingerprint, then it is determined in step 330 that the software or the software component is trustworthy and then the hardware signal may be switched into a second state in step 340. This step 340 is not mandatory, for example the hardware signal may not be changed when trustworthiness is given. Furthermore, if the software or the software component is determined to be not trustworthy in step 330, then the hardware signal is switched into the first state in step 350.

For instance, the verification of trustworthiness of software according to the first exemplary method depicted in FIG. 3 may comply with the Trusted Computing Group's Mobile TPM specification, wherein said extracted digital fingerprint may correspond to a hash value of the software, and said digital reference integrity fingerprint may correspond to a reference integrity metric certificate.

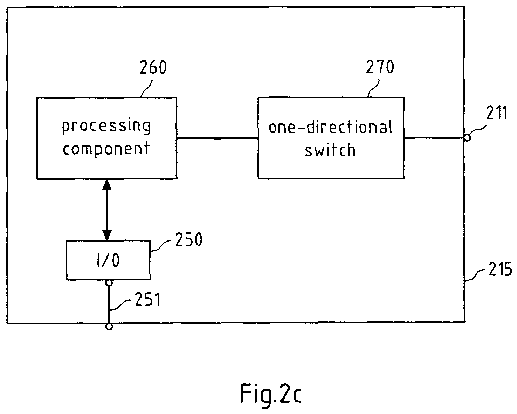

FIGS 2a, 2b and 2c depicts a first, a second and a third exemplary embodiment of a trusted computing component 200, 210, 215 which may be used for the trusted computing component 130 depicted in FIG. 1a, and which may be applied to perform the exemplary methods depicted in FIGS 3-5.

In the first and the second exemplary embodiment, said trusted computing component is represented by a trusted platform module (TPM) 200, 210 comprising a microcontroller 240, a set of platform configuration registers (PCRs) 220, a memory 230, an input/output interface 250 for connecting the TPM 200, 210 to a bus system like the bus system 150 depicted in FIG. 1a, and a hardware signal line 241 connected to a connector 211 like the connector 161 of FIG. 1a for transmitting the hardware signal like the signal 162 of FIG. 1a. According to the first exemplary embodiment, said connector 211 may be connected to the microcontroller 240, so that the microcontroller may switch the hardware signal on said hardware signal line 241 into the first state or the second state, or, alternatively, according to the second exemplary embodiment, said hardware connector 211 may be connected to a register of said set of registers 220, or to a particular bit of a register of said set of registers 220. When said TPM 200, 210 is used as the trusted computing component 150 in the apparatus 100 depicted in FIG. 1a, then connector 211 is similar to connector 161 of FIG. 1a for providing said at least one hardware signal line 162 via connector 161 depicted in FIG. 1a.

For instance, said trusted platform module (TPM) 200, 210 may comply with the Trusted Computing Group's Mobile TPM specification, and said trusted platform module may represent a TPM core, wherein said TPM core may be a protected core.

Furthermore, for example, said Trusted Platform Module 200, 210 comprising the set of Platform Configuration Registers (PCRs) 220 may be applied to perform the verification of software and/or software components as explained in the summary of the invention, wherein the reference integrity metric certificates are stored in memory 230 and the microcontroller is used to hash at least one reference integrity metric of a software or a software component and to perform the trustworthiness verification.

The third exemplary embodiment of the trusted computing component 215 depicted in FIG. 2c comprises a processing component 260 for verifying trustworthiness of software, wherein this trusted computed component 215 may basically correspond to the trusted platform module 200, 210 of the first or the second exemplary embodiment depicted in FIG. 2a so that the processing component 260 may comprise said microcontroller 240, said a set of platform configuration registers (PCRs) 220, and said memory 230, but also any other realization may be applied for incorporation in said processing component 260.

The processing component 260 is connected to a one-directional switch 270, and the one directional switch 270 is connected to at least one connector 211 for transmitting a hardware signal. Said one-directional switch 270 cannot switch the hardware signal from said first state into a different state.

For instance, said hardware signal is switched into a second state prior to verifying trustworthiness of said software by said one-directional switch 270, wherein said second state may indicate that trustworthiness of software is given.

Thus, in case that software is determined to be not trustworthy and said hardware signal by means of said processing component, the processing component 260 controls the one-directional switch 270 to switch said hardware signal from the second state into said first state, and then it is impossible to switch the hardware signal back into the second state for indicating that the software is trustworthy. This prevents tampering with the hardware signal after software has been determined to be not trustworthy. If software is determined to be not trustworthy, then said one-directional switch 270 will keep the hardware signal in said first state until the apparatus is switched off.

This allows, when having a secure boot sequence, as exemplarily explained below or in the summary of the invention, to keep all interfaces 250 of the processing component 260 for performing the trustworthiness verification public and open, since the hardware signal can not be switched from said first state into the second state as prevented by said one-directional switch 270.

The one-directional switch 270 may also be implemented by a TPM function based on the second exemplary embodiment of the trusted computing component 210 depicted in FIG. 2b, wherein said register of said set of PCRs 230 wired to said at least one hardware signal line 221, 211 can not be switched from a value indicating the first state of said hardware signal into a value indicating a different state. E.g., the lowest bit of said register is wired to said at least one hardware signal line 221, 211, and if software is detected to be not trustworthy by a reference integrity metric certificate, then said reference integrity metric certificate updates the content of said register to a value corresponding to the first state, e.g. to value 2, wherein said value remains unchanged until the apparatus is switched off and thus said register corresponds functionally to said one-directional switch 270.

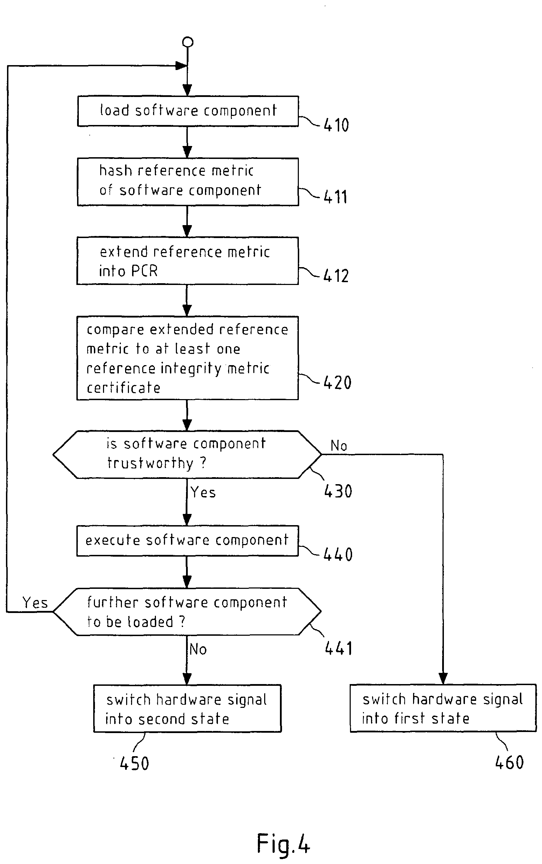

FIG. 4 depicts a flowchart of a second exemplary method for verification of software in a processor core 100, which may used to verify boot software before/while the processor core 100 is booted, but it also may be used to verify several components of a software loaded into the processor core 100 during runtime operation of the processor core 100. The verification may be performed by the first exemplary TPM 200 or the second exemplary TPM 210 or the third exemplary TPM 215 depicted in FIGS 2a, 2b and 2c, respectively.

For instance, said boot sequence of the processor core may comprise to load and execute several software components successively, like firmware, BIOS, an operating system loader and the operating system and other components.

For example, before starting the verification of the boot software, any PCR of the set of PCRs is initialized, and the hardware signal is switched to the first state.

For instance, a CRTM of the TPM 200, 210 may cause to load the first software component according to step 410, and the CRTM may cause to measure the first software component of said several software components of the boot sequence by hashing a first reference metric of said software component in step 411, wherein said first software component may correspond to the firmware in said apparatus. Afterward, this first reference metric is extended in a first PCR of said set of PCRs 200 in step 412. Then this first reference metric in the first PCR is compared to at least one reference integrity metric certificate in step 420 in order to verify the trustworthiness of the first software component in step 430, and only if the first component is determined to be trustworthy in step 430, then said first software component is executed in step 440 in order to initiate the boot sequence, otherwise the hardware signal is switched in the first state according to step 460 and the boot process may be stopped. Then, if trustworthiness of the first software component is given according to step 430, after executing the software component in step 440, it is checked whether there is a further software component to be loaded in step 441.

If there is a further software component to be loaded, like a successive second software component of the boot sequence, then the flow chart flips to the beginning and the second software component is loaded in step 410, and a second reference metric is hashed of said second software component in step 411. Then, the second reference metric is extended into a second PCR of said set of PCRs, e.g. by concatenating the second reference metric with the content of the preceding PCR and extending the hashed value of this concatenated second reference metric with the content of the preceding PCR into said further PCR. Then, the extended second reference metric is compared with at least one reference integrity metric in step 420 in order to verify the trustworthiness of the second software component in step 430. In this iterative way, the trustworthiness of the boot sequence's software components can be verified, wherein a reference metric is hashed from a next software component of the boot sequence in step 411, this reference metric is extended into the next PCR of said set of PCRs 220 by concatenating this reference metric with the content of the PCR which corresponds to the preceding software component and extending it in the next PCR of said set of PCR in step 412. If the boot sequence is correct, i.e. if the extended reference metric of the last software component of the boot sequence which depends on the content of all preceding PCRs is verified to be correct in steps 420 and 430, then the hardware signal may be switched in a second state in step 450 to indicate trustworthiness of the software of the boot sequence.

For instance, if the second exemplary embodiment of the TPM 210 depicted in FIG. 2b is used, then the hardware signal line 221 is wired via the connector 211 to a PCR of said set of PCRs, e.g. to PCR number 15 if said set of PCRs comprises 16 PCRs, and the hardware signal line may be wired , for example, to the least significant bit of PCR number 15, and said PCR 15 is set to a preset value when the boot sequence is verified to be trustworthy, e.g. to value 1 or any odd value, so that the signal on said at least one hardware signal line corresponds to the hardware signal in the second state and indicates the boot software is trustworthy. If trustworthiness is not given, then said PCR's content is 0 and corresponds to the first state of the hardware signal.

Furthermore, said PCR 15, which may correspond to said further register mentioned in the summary of invention, is suited to be locked, so that it only can be updated by a reference integrity metric certificate. Said locking function may be provided by a TPM feature. Said reference integrity metric not only contains a reference value for checking the validity of at least one of said at least one extended reference metric, it also contains a place for a value that can be set into said PCR. Said value in said reference integrity metric is only set into said PCR 15 when integrity verification of said reference integrity metric compared to at least one measured reference metric is a success. For instance, said reference metric certificate may contain the value 1 in said place, and said reference certificate may be used to verify the extended reference metric of said last software component of the boot sequence, thereby automatically verifying the preceding extended reference metrics of said preceding PCRs, so that said PCR 15 is only updated with value 1 by said reference metric certificate when trustworthiness of all software components of the boot sequence is given and correspondingly the hardware signal is switched into the second state (step 450). If said reference metric certificate does not detect the software to be trustworthy (step 430), then said PCR 15 keeps its value 0 and keeps switching the hardware signal into the first state (step 460).

Alternatively, according to the first exemplary embodiment of the TPM 200 depicted in FIG. 2a, the microcontroller 240 of the TPM 200 is connected to hardware signal line 241 and switches the signal on said hardware signal line into the second state for indicating the boot software is trustworthy when trustworthiness of the software of the boot sequence is given according to step 450, otherwise the microcomputer switches the signal on said hardware signal line 241 to the first state according to step 460.

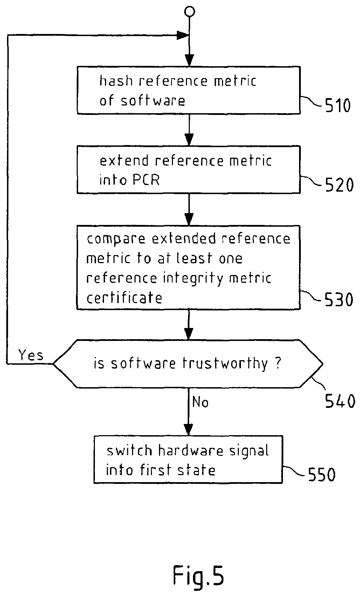

FIG. 5 depicts a flowchart of a third exemplary method for verification of software in a processor core 100, which may be applied to perform the trustworthiness verification of software during runtime operation of the processor core 100.

For example, verification of software is necessary when a user wants to load new software in the processor core 100, which may be software for the operating system or a new kernel or anything else.

For example, said hardware signal is switched into the first state prior to letting a user load software into the processor core 100, so that the radio interface 170 and/or the radio core 129 is disabled. Then said software is loaded into a memory of the processor core, and said software may be verified according to the method depicted in the flowchart in FIG. 5.

A hash reference metric is extracted from the software in step 510, then said reference metric is extended into a PCR in step 520, wherein this extending may be performed according to step 420 explained in the second exemplary embodiment of the method above. For example, the reference metric is extended by concatenating this reference metric with the content of the PCR which corresponds to a preceding software component and extending it in the next PCR of said set of PCR in step 520. Then, this extended reference metric is compared to at least one reference integrity metric in step 530 and if the software is verified to be not trustworthy in step 540, the hardware signal is switched into the first state.

Furthermore, the reference integrity metric certificates may be bound to a counter, for example a bootstrap counter or a protect counter for freshness, so that the step operation of comparing the reference metric in step 420 of the second exemplary embodiment of the method and the corresponding step 530 of the third exemplary embodiment of the method may further comprise comparing the counter of the reference integrity metric certificate, e.g. to guarantee that an actual upgraded software version is loaded, so that older software version, which may have errors, are detected by means of this counter.

While there have been shown and described and pointed out fundamental novel features of the invention as applied to preferred embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto. Furthermore, in the claims means-plus-function clauses are intended to cover the structures described herein as performing the recited function and not only structural equivalents, but also equivalent structures.

Any subject-matter contained in the claims of the parent patent application of this divisional application is hereby included by reference. The following statements correspond to the subject-matter of the claims of the parent application, as filed.

A method comprising:
verifying trustworthiness of a software in an apparatus; and
switching a hardware signal in the apparatus into a first state when said software is not trustworthy.

The method, wherein said apparatus comprises at least one processing component, said method comprising:
disabling at least one of said at least one processing component when said hardware signal is in the first state.

The method, wherein said apparatus comprises at least one interface, said method comprising:
disabling at least one of said at least one interface when said hardware signal is in the first state.

The method, said method comprising:
extracting at least one digital fingerprint of said software;
comparing at least one of said at least one digital fingerprint to at least one reference integrity fingerprint for verifying trustworthiness of said software.

The method, wherein said apparatus comprises a trusted platform module including a set of registers and a hashing function, said method comprising:
hashing at least one reference metric of said software;
extending said at least one reference metric into at least one register of said set of registers;
comparing content of at least one of said at least one register to at least one reference integrity metric certificate for verifying trustworthiness of said software and, optionally:
   wherein a further register of said set of registers can only be updated by a reference integrity metric certificate, wherein at least bit of said further register is wired to at least one hardware signal line, wherein said at least one hardware signal line transmits said hardware signal, and wherein said method further comprises:
   setting said further register to a first value which switches the hardware signal on said at least one hardware signal line in the first state prior to verifying trustworthiness of said software;
   updating said further register to a second value by said reference integrity metric certificate in case that the result of said comparing the content of said at least one of said at least one register to at least one reference integrity metric certificate for verifying trustworthiness is a success, wherein said second value switches the hardware signal on said at least one hardware signal in a second state indicating trustworthiness of said software.

The method, wherein the trustworthiness is verified during a boot sequence of the apparatus.

The method, wherein the trustworthiness is verified during runtime operation of the apparatus.

The method, wherein said hardware signal is switched into a second state prior to verifying trustworthiness of said software, and wherein said hardware signal cannot be switched from said first state into a different state without restarting the apparatus and, optionally:
wherein said hardware signal is transmitted via at least one hardware signal line, and wherein said hardware signal is switched by a one-directional switch, wherein said one-directional switch cannot switch the hardware signal from said first state into a different state without restarting the apparatus.

The method, wherein the apparatus is a single-chip processor core, and wherein said hardware signal is transmitted via at least one hardware signal line wired inside the single-chip processor core.

An apparatus comprising:
a memory configured to store software;
a first processing component configured to verify trustworthiness of the software;
at least one hardware signal line connected to said first processing component, wherein said first processing component is capable of switching a signal on said at least one hardware signal line into a first state when said software is not trustworthy.

The apparatus, wherein said apparatus comprises at least one further processing component, and wherein at least one of said at least one hardware signal line is connected to at least one of said at least one further processing component, and wherein in the first state said signal on said at least one hardware signal line disables said at least one of said at least one processing component.

The apparatus, wherein said apparatus comprises at least one interface, and wherein at least one of said at least one hardware signal line is connected to at least one of said at least one interface, and wherein in the first state said signal on said at least one hardware signal line disables said at least one of said the least one interface.

The apparatus, wherein said first processing component is configured to extract at least one digital fingerprint of said software and to compare at least one of said at least one digital fingerprint to at least one reference integrity fingerprint for verifying the trustworthiness of said software.

The apparatus, wherein said first processing component is a trusted platform module comprising a set of registers and a hashing function, wherein said trusted platform module is configured to hash at least one reference metric of said software, and to extend said at least one reference metric into at least one register of said set of registers, and to compare the content of at least one of said at least one register to at least one reference integrity metric certificate for verifying the trustworthiness of said software and, optionally:
wherein a further register of said set of registers can only be updated by a reference integrity metric certificate, wherein at least one bit of said further register is wired to at least one hardware signal, wherein said at least one hardware signal line transmits said hardware signal, and wherein said trusted platform module is configured to set said further register to a first value which switches the hardware signal on said at least one hardware signal line in the first state prior to verify trustworthiness of said software, to update said further register to a second value by said reference integrity metric certificate in case that the result of said comparing the content of said at least one of said at least one register to at least one reference integrity metric certificate for verifying trustworthiness is a success, wherein said second value switches the hardware signal on said at least one hardware signal in a second state indicating trustworthiness of said software.

The apparatus, wherein the first processing component is configured to verify the trustworthiness during a boot sequence of the apparatus.

The apparatus, wherein the first processing component is configured to verify the trustworthiness during runtime operation of the apparatus.

The apparatus, wherein said processing component is configured to switch said hardware signal into a second state prior to verifying trustworthiness of said software, and wherein said hardware signal cannot be switched from said first state into said second state without restarting the apparatus and, optionally:
wherein said apparatus comprises a one-directional switch for switching said hardware signal on said at least one hardware signal line, wherein said one-directional switch is connected to said first processing component, and wherein said one-directional switch cannot switch the hardware signal from said first state into said second state without restarting the apparatus.

The apparatus, wherein the apparatus is a single-chip processor core, and wherein said at least one hardware signal line is wired inside the processor.

An electronic device comprising the apparatus.

A computer program product in which a program code is stored in a computer readable medium, said program code realizing the following when executed by a processor:
verifying trustworthiness of a software in an apparatus; and
switching a hardware signal in an apparatus into a first state when said software is not trustworthy.

The computer program product, wherein said apparatus comprises at least one processing component, said computer program causing disabling at least one of said at least one processing component when said hardware signal is in the first state.

The computer program product, wherein said apparatus comprises at least one interface, said computer program causing disabling at least one of said at least one interface when said hardware signal is in the first state.

The computer program product, said computer program causing:
extracting at least one digital fingerprint of said software;
comparing at least one of said at least one digital fingerprint to at least one reference integrity fingerprint for verifying trustworthiness of said software.

The computer program product, wherein said apparatus comprises a trusted platform module including a set of registers and a hashing function, said computer program causing:
hashing at least one reference metric of said software;
extending said at least one reference metric into at least one register of said set of registers;
comparing content of at least one of said at least one register to at least one reference integrity metric certificate for verifying trustworthiness of said software and, optionally:
   wherein a further register of said set of registers can only be updated by a reference integrity metric certificate, wherein at least one bit of said further register is wired to at least one hardware signal, wherein said at least one hardware signal line transmits said hardware, and wherein said computer program further causes:
setting said further register to a first value which switches the hardware signal on said at least one hardware signal line in the first state prior to verifying trustworthiness of said software;
updating said further register to a second value by said reference integrity metric certificate in case that the result of said comparing the content of said at least one of said at least one register to at least one reference integrity metric certificate for verifying trustworthiness is a success, wherein said second value switches the hardware signal on said at least one hardware signal in a second state indicating trustworthiness of said software.

The computer program product, wherein the trustworthiness is verified during a boot sequence of the apparatus.

The computer program product, wherein the trustworthiness is verified during runtime operation of the apparatus.

The computer program product, wherein said hardware signal is switched into a second state prior to verifying trustworthiness of said software, and wherein said hardware signal cannot be switched from first state into a different state without restarting the apparatus and, optionally:
wherein said hardware signal is transmitted via at least one hardware signal line, and wherein said hardware signal is switched by a one-directional switch, wherein said one-directional switch cannot switch the hardware signal from said first state into a different state without restarting the apparatus, and wherein said one-directional switch is controlled by said computer program.

The computer program product, wherein the apparatus is a single-chip processor core, and wherein said hardware signal is transmitted via at least one hardware signal line wired inside the single-chip processor core.

An apparatus comprising:
memory means for storing software;
first processing means for verifying trustworthiness of the software; and
at least one hardware signal line connected to said first processing means, wherein said first processing means comprises means for switching a signal on said at least one hardware signal line into a first state when said software is not trustworthy.

## Claims

1. A method comprising:
verifying trustworthiness of a software in an apparatus during a boot sequence of the apparatus; and
switching a hardware signal in the apparatus into a first state when said software is not trustworthy.

2. The method according to claim 1, wherein the boot sequence of the apparatus comprises loading and executing a plurality of software components successively.

3. The method according to any preceding claim, further comprising preventing execution of the software when said hardware signal is in the first state.

4. The method according to any preceding claim, further comprising:
extracting one or more digital fingerprints of said software; and
comparing at least one of said one or more digital fingerprints to at least one reference integrity fingerprint for verifying trustworthiness of said software.

5. The method of claim 5, wherein the digital fingerprint is a hash.

6. The method of any preceding claim, wherein verifying trustworthiness of the software verifies that the software corresponds to software certified by a manufacturer.

7. The method of any preceding claim, further comprising:
verifying trustworthiness of a second software in the apparatus when the software is trustworthy; and
switching a hardware signal in the apparatus into a first state when the second software is not trustworthy.

8. The method of any preceding claim, wherein before verifying trustworthiness of the software in the apparatus using a hash, verifying trustworthiness of other software in the apparatus, and when the other software is trustworthy, creating the hash for verifying trustworthiness of the software.

9. An apparatus comprising:
a memory for storing software;
a first processing component for verifying trustworthiness of the software during a boot sequence of the apparatus;
at least one hardware signal line connected to said first processing component, wherein said first processing component is configured to switch a signal on said at least one hardware signal line into a first state when said software is not trustworthy.

10. The apparatus according to claim 10, wherein the boot sequence of the apparatus comprises loading and executing a plurality of software components successively.

11. The apparatus according to any of the claims 9 - 10, wherein said first processing component is configured to extract at least one digital fingerprint of said software and to compare at least one of said at least one digital fingerprint to at least one reference integrity fingerprint for verifying the trustworthiness of said software.

12. The apparatus according to any of the claims 9- 11 wherein the apparatus is configured to verify trustworthiness of a second software in the apparatus when the software is trustworthy; and is configured to switch a hardware signal in the apparatus into a first state when the second software is not trustworthy.

13. The apparatus according to any of the claims 9 - 12, wherein the apparatus is configured to verify trustworthiness of the software in the apparatus using a hash, and is configured to verify trustworthiness of other software in the apparatus, and when the other software is trustworthy, create the hash for verifying trustworthiness of the software.

14. The apparatus according to any of the claims 9 - 13, wherein the apparatus comprises a single-chip processor core, and said at least one hardware signal line is wired inside the processor.
